# EUROPÄISCHE PATENTSCHRIFT

(11) **EP 1 519 064 B1**
(45) Veröffentlichungstag und Bekanntmachung des Hinweises auf die Patenterteilung: **20.09.2006**
(21) Anmeldenummer: 04019333.6
(22) Anmeldetag: 14.08.2004
(51) Int. Cl.: F16D 3/224, F16D 3/22

(54) **Homokinetische Gelenkverbindung**
Constant velocity joint.
Joint homocinétique.

(30) Priorität: 26.09.2003 DE 10344732
(43) Veröffentlichungstag der Anmeldung: 30.03.2005
(73) Patentinhaber: AUDI AG, 85045 Ingolstadt (DE)
(72) Erfinder: Brandl, Hans Jürgen, 86706 Weichering (DE)
(74) Vertreter: Asch, Konrad

(56) Entgegenhaltungen:
- EP-A- 0 849 097
- US-A- 3 944 011
- US-A- 4 311 224

## Beschreibung

Die Erfindung betrifft eine homokinetische Gelenkverbindung für den Antrieb gelenkter Räder eines Kraftfahrzeuges.

Eine solche Gleichlauf-Gelenkverbindung ist z. B. aus der DE 101 04 550 A1 bekannt und umfasst eine Antriebswelle, einen Achszapfen und der Übertragung der Antriebs- und Lenkmomente dienende von einem zentrierkäfig in der den Koppelpunkt der Gelenkverbindung enthaltenen Wirkungsebene gehaltenen Kugeln, die längs Beugungswinkel zwischen Antriebswelle und Achszapfen ermöglichenden Kugellaufbahnen geführt sind, welche in einem mit der Antriebswelle fest verbundenen nussförmigen Antriebswellenteil und in einem dieses teilweise umfassenden, mit dem Achszapfen fest verbundenen glockenförmigen Gehäuse angeordnet sind.

Um eine gute Manövrierfähigkeit eines mit einer solchen Gelenkverbindung ausgestatteten Kraftfahrzeuges zu ermöglichen, also um einen möglichst kleinen Wendekreis zu erzielen besteht das Bestreben die konstruktiv und funktionell maximal möglichen Beugewinkel solcher Gelenkverbindungen voll auszunutzen, die etwa bei 48° bis 50° liegen. Die Anwendung maximal möglicher Gelenkbeugewinkel führt aber, wie die Erfahrung gezeigt hat, zu ungünstigen Toleranzbedingungen hinsichtlich Gelenkgeometrie, Bauteilelastizitäten und insbesondere zu einem hohen Verschleiß, was im täglichen Einsatz bei öfteren Volleinschlag zum Zerstören der Gelenkverbindungen führt.

Hier Abhilfe zu schaffen durch eine solche Ausbildung einer homokinetischen Gelenkverbindung, die einen größeren Beugewinkel als bisher ermöglicht, ist Aufgabe der Erfindung.

Ausgehend von einer homokinetischen Gelenkverbindung der eingangs genannten Art ist dieser Aufgabe gemäß dieser Erfindung dadurch gelöst, dass das Gehäuse mit dem Achszapfen über eine federbelastete Formschlussverbindung kraft- und formschlüssig derart verbunden ist, dass zwecks Vergrößerung des maximalen Beugungswinkels das Gehäuse über die beim Lenkeinschlag vollständig ausgelenkte Antriebswelle gegenüber dem Achszapfen um einen Zusatzbeugewinkel verschwenkbar ist.

Durch die Erfindung wird eine konventionell wirkende homokinetische Gelenkverbindung mit einer sogenannten Überlastfunktion versehen, wobei der konventionell ausgebildete Teil der Gelenkverbindung wie bisher die üblichen gelenkten Fahrmanöver abdeckt, bei denen der konstruktiv vorgegebene Beugewinkel durch das Anlegen der Antriebswelle an dem Gehäuse begrenzt ist, bei dem aber beim weiteren Auslenken der gelenkten Räder, z. B. bei einem Parkmanöver, die Überlastfunktion einsetzt und dabei einen zusätzlichen Beugewinkel der Gelenkverbindung ermöglicht.

Nach einer bevorzugten Ausführungsform der Erfindung ist der Achszapfen an der dem Gehäuse zugewandten Stirnseite als eine mit einer Stirnverzahnung versehene Kugelkalotte ausgebildet, mit der das eine damit korrespondierende, eine Stirnverzahnung aufweisende zentrische Öffnung besitzende glockenförmige Gehäuse über ein eingerolltes Tellerfederpaket formschlüssig in Eingriff gehalten ist.

Weitere Merkmale der Erfindung ergeben sich aus den Unteransprüchen.

Die Erfindung ist nachfolgend anhand eines in der Zeichnung dargestellten Ausführungsbeispiels beschrieben. Es zeigen:
- Fig. 1: einen Schnitt durch die homokinetische Gelenkverbindung gemäß der Erfindung in der konventionellen Grenzstellung und
- Fig. 2: die homokinetische Gelenkverbindung gemäß Fig. 1 ausgeschwenkt um einen Zusatzbeugewinkel.

Eine Drehbewegungen gleichförmig übertragende in den Figuren insgesamt mit dem Bezugszeichen 10 bezeichnete homokinetische Gelenkverbindung für den Antrieb gelenkter Räder eines Kraftfahrzeuges umfasst eine eine Längsachse L₁ besitzende Antriebswelle 12 und eine eine Längsachse L₂ besitzenden Achszapfen 14, von denen der Antriebswelle ein kalottenförmiges Antriebswellenteil 16 und dem Achszapfen 14 ein glockenförmiges über das Antriebswellenteil 16 greifendes Gehäuse 18 zugeordnet sind. Mittels eines Zentrierkäfiges 20 gehaltene Kugeln 21 laufen in Kugellaufbahnen 22 und 23, die der Innenmantelfläche des Gehäuses 18 und der Außenmantelfläche des Antriebwellenteils 16 zugeordnet und innerhalb einer den Koppelpunkt K1 der Gelenkverbindung schneidenden Wirkungsebene WE angeordnet sind.

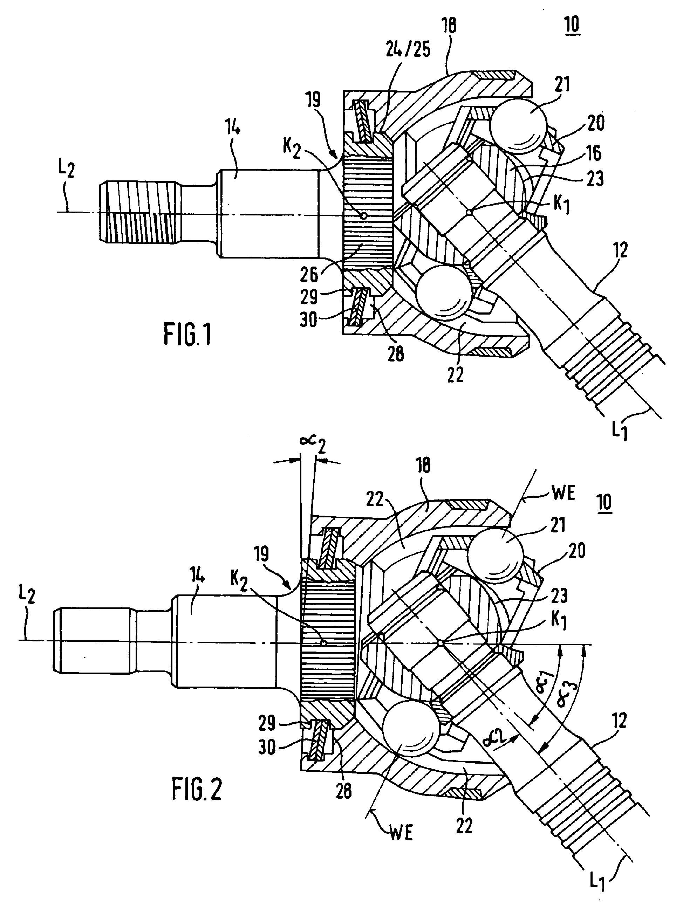

Das Gehäuse 18 weist eine dem Achszapfen 14 zugewandte im Bezug auf dessen Längsachse L₂ sphärisch gekrümmte und mit einer Stirnverzahnung 24 versehene zentrische kreisförmige Öffnung 25 auf, die mit einer damit formschlüssig korrespondierenden ebenfalls eine Stirnverzahnung 26 aufweisenden Kugelkalotte 19 an der zugewandten Stirnseite des Achszapfens 14 in der Weise in Eingriff steht, dass das Gehäuse 18 um den Koppelpunkt K2 gegenüber der Kugelkalotte 19 um einen Zusatzbeugewinkel α₂ verschwenkbar ist. Ein in einander gegenüberliegenden Nuten 28 und 29 von Gehäuse und Kugelkalotte angeordnetes Tellerfederpaket 30 hält das Gehäuse 18 in bezug auf die zugeordnete Kugelkalotte 19 in der in Fig. 1 dargestellten Normallage.

Bei Volleinschlag der zu lenkenden hier nicht dargestellten Räder des ebenfalls nicht dargestellten Kraftfahrzeuges gelangt die Antriebswelle 12 in die in Fig. 1 dargestellte Anschlagstellung, die dem konstruktiv vorgegebenen Beugungswinkel α₁ - vgl. Fig. 2 - entspricht. Infolge der vorstehend beschriebenen geteilten Ausbildung des Gehäuses 18 kann nunmehr unter Überwindung der Federkraft des Tellerfederpaketes 30 das Gehäuse als Ganzes mit den kraft- und bewegungsübertragenden Kugeln 21 um den Zusatzbeugewinkel α₂ gegenüber der Längsachse L₂ des Achszapfens 14 verschwenkt werden, wie dies in Fig. 2 dargestellt ist. Dies führt zu einem Beugungswinkel α₃, also zu einem besonders kleinen Wendekreis eines damit ausgerüsteten Kraftfahrzeuges.

Beim Nachlassen der Lenkkraft bewegt das vorgespannte Tellerfederpaket 30 das Gehäuse 18 in die in Fig. 1 dargestellte normale Grenzstellung - Beugungswinkel α₁ - zurück.

Eine ausgeübte hohe Lenkkraft führt also nicht sofort zur Beschädigung von Kugeln und Kugellaufbahnen, sondern erst mal zum Ausschwenken des Gehäuses um den zusätzlichen Beugungswinkel α₂.

Anstelle des vorstehend beschriebenen Tellerfederpaketes 30 können auch zylindrische Schraubenfedern oder vernietete bzw. verschraubte Stahlfederbänder verwendet werden. Auch ist an Stelle der sphärischen Stirnverzahnung 24, 26 eine Kegelradverzahnung zwischen Kugelkalotte 16 und Gehäuse 18 möglich, zwecks Aufrechterhaltung einer federbelasteten Formschlussverbindung zwischen Gehäuse 18 und Achszapfen 14.

### BEZUGSZEICHENLISTE

- 10: homokinetische Gelenkverbindung
- 12: Antriebswelle
- 14: Achszapfen
- 16: kalottenförmiges Antriebsteil
- 18: Gehäuse
- 19: Kugelkalotte
- 20: Zentrierkäfig
- 21: Kugeln
- 22: Kugellaufbahn
- 23: Kugellaufbahn
- 24: Sirnverzahnung
- 25: kreisförmige Öffnung
- 26: korrespondierende Stirnverzahnung
- 28: Nut
- 29: Nut
- 30: Tellerfederpaket

- L₁: Längsachse Antriebswelle
- L₂: Längsachse Achszapfen
- K1: erster Koppelpunkt
- K2: zweiter Koppelpunkt
- WE: Wirkungsebene
- α₁: Beugungswinkel
- α₂: Zusatzbeugewinkel
- α₃: Gesamtbeugungswinkel

## Patentansprüche

1. Homokinetische Gelenkverbindung für den Antrieb gelenkter Räder eines Kraftfahrzeuges, mit einer Antriebswelle (12), einem Achszapfen (14) und der Übertragung der Antriebs- und Lenkmomente dienenden von einem Zentrierkäfig (20) in der den Koppelpunkt der Gelenkverbindung enthaltenen Wirkungsebene gehaltenen Kugeln (21), die längs Beugungswinkel zwischen Antriebswelle (12) und Achszapfen (14) ermöglichenden Kugellaufbahnen (22, 23) geführt sind, welche in einem mit der Antriebswelle (12) fest verbundenen kalottenförmigen Antriebswellenteil (16) und in einem dieses teilweise umfassenden mit dem Achszapfen (14) fest verbundenen glockenförmigen Gehäuse (18) angeordnet sind, **dadurch gekennzeichnet, dass** das Gehäuse (18) mit dem Achszapfen (14) über eine federbelastete Formschlussverbindung (24, 25, 26, 30) kraft- und formschlüssig derart verbunden ist, dass zwecks Vergrößerung des maximalen Beugungswinkels (α₁) des Gehäuses (18) dieses über die vollständig ausgelenkte Antriebswelle (12) gegenüber dem Achszapfen (14) um einen Zusatzbeugewinkel (α₂) verschwenkbar ist.

2. Gelenkverbindung nach Anspruch 1, **dadurch gekennzeichnet, dass** der Achszapfen (14) an der dem Gehäuse (18) zugewandten Stirnseite als eine mit einer Stirnverzahnung (24) versehene Kugelkalotte (19) ausgebildet ist, mit der das eine damit korrespondierende, eine Stirnverzahnung (26) aufweisende zentrische Öffnung (25) besitzende glockenförmige Gehäuse (18) über ein eingerolltes Tellerfederpaket (30) formschlüssig in Eingriff gehalten ist.

3. Gelenkverbindung nach den Ansprüchen 1 und 2, **dadurch gekennzeichnet, dass** die federbelastete Formschlussverbindung als eine über zylindrische Schraubenfedern zusammengehaltene Kegelradverzahnung ausgebildet ist.

4. Gelenkverbindung nach den Ansprüchen 1 und 2, **dadurch gekennzeichnet, dass** der federbelasteten Formschlussverbindung vernietete und/oder verschraubte Stahlfederbänder zugeordnet sind.

## Claims

1. Constant velocity joint for the drive to steered wheels of a motor vehicle, with a drive shaft (12), a stub axle (14) and balls (21) serving to transmit drive and steering torque which are held by a centring cage (20) in the action plane contain[ing] the coupler point of the joint, and are guided along ball races (22, 23) which permit angular deflections between drive shaft (12) and stub axle (14) and are arranged in a dome-shaped driveshaft part (16) fixedly joined to the drive shaft (12) and in a bell-shaped casing (18) partly surrounding the latter and fixedly joined to the stub axle (14), **characterized in that** the casing (18) is frictionally and positively connected to the stub axle (14) by a spring-loaded positive connection (24, 25, 26, 30) so that in order to increase the maximum angle of deflection (α1) of the casing (18), the casing (18) is pivotable by the fully deflected drive shaft (12) through an additional angle of deflection (α2) with respect to the stub axle (14).

2. Joint according to Claim 1, **characterized in that** the stub axle (14) is configured at the end towards the casing (18) as a ball joint (19) provided with spur teeth (24) with which the bell-shaped casing (18) which possesses a corresponding central opening (25) with spur teeth (26) is kept in positive mesh by a rolled disk spring assembly (30).

3. Joint according to Claims 1 and 2, **characterized in that** the spring-loaded positive connection is configured as bevel gear teeth kept in mesh by cylindrical helical springs.

4. Joint according to Claims 1 and 2, **characterized in that** riveted and/or screwed steel spring strips are used for the spring-loaded positive connection.

## Revendications

1. Liaison articulée homocinétique pour l'entraînement de roues guidées d'un véhicule automobile, comprenant un arbre d'entraînement (12), un tourillon (14) et des billes (21) servant à la transmission des couples d'entraînement et d'articulation, maintenues par une cage centrale (20) dans le plan d'action contenant le point de couplage de la liaison articulée, lesquelles billes sont guidées le long de chemins de roulement à billes (22, 23) permettant des angles de diffraction entre l'arbre d'entraînement (12) et le tourillon (14), lesquels chemins de roulement à billes sont disposés dans une partie d'arbre d'entraînement (16) en forme de calotte reliée de manière fixe à l'arbre d'entraînement (12) et dans un boîtier (18) en forme de cloche relié de manière fixe au tourillon (14), entourant en partie celui-ci, **caractérisée en ce que** le boîtier (18) est relié par coopération de forces et de formes au tourillon (14) par l'intermédiaire d'une liaison par coopération de formes sollicitée par un ressort (24, 25, 26, 30), de telle sorte qu'afin d'augmenter l'angle de diffraction maximal (α₁) du boîtier (18), celui-ci peut pivoter par l'intermédiaire de l'arbre d'entraînement (12) entièrement dévié par rapport au tourillon (14) autour d'un angle de diffraction additionnel (α₂).

2. Liaison articulée selon la revendication 1, **caractérisée en ce que** le tourillon (14) est réalisé sur la face frontale tournée vers le boîtier (18) comme une calotte sphérique (19) pourvue d'une denture frontale (24), calotte avec laquelle le boîtier (18) en forme de cloche, possédant une ouverture centrale (25), comprenant une denture frontale (26), de ce fait correspondante, est maintenu en prise par coopération de formes par l'intermédiaire d'un paquet de rondelles Belleville enroulé (30).

3. Liaison articulée selon l'une quelconque des revendications 1 et 2, **caractérisée en ce que** la liaison par coopération de formes sollicitée par un ressort est conçue sous forme d'une denture de roue conique maintenue par des ressorts hélicoïdaux cylindriques.

4. Liaison articulée selon l'une quelconque des revendications 1 et 2, **caractérisée en ce que** des bandes de ressort d'acier rivetées et/ou vissées sont associées à la liaison par coopération de formes sollicitée par un ressort.
